# EUROPEAN PATENT APPLICATION

(11) **EP 4 442 177 A1**
(43) Date of publication of application: **09.10.2024**
(21) Application number: 23884693.5
(22) Date of filing: 25.10.2023
(51) Int. Cl.: A47J 31/60, A47J 31/41, A47J 31/50

(54) **CLEANING WATER PATH OF BEVERAGE DISPENSER AND REFRIGERATING DEVICE, REFRIGERATING DEVICE, AND MILK CHANNEL CLEANING METHOD**

(30) Priority: 01.11.2022 CN 202211357814
(71) Applicant: Kalerm Technology (Suzhou) Co., Ltd, Suzhou Jiangsu 215134 (CN)
(72) Inventor: LU, Dean, Suzhou, Jiangsu 215000 (CN); NIE, Hengan, Suzhou, Jiangsu 215000 (CN)
(74) Representative: Murgitroyd & Company
(86) International application number: PCT/CN2023/126524
(87) International publication number: WO 2024/093761

(57) **Abstract**

Provided are a cleaning water pipe for a refrigerating apparatus and a beverage machine, the refrigerating apparatus and a method of cleaning a milk pipe, and the cleaning water pipe includes: a water supply pipeline; a milk supply pipeline, connected between a milk supply source and a milk feeding pipeline of the beverage machine, and the milk supply source being installed in the refrigerating apparatus; and a liquid guiding pipe and a cleaning box installed in the refrigerating apparatus, an end of the liquid guiding pipe is connected between the water supply pipeline and the milk supply pipeline, another end of the liquid guiding pipe is selectively connected to the milk supply source or the cleaning box to switch between a milk supply mode and a first cleaning mode, and an electric valve is installed on the water supply pipeline; and in the first cleaning mode, the another end of the liquid guiding pipe remains connected to the cleaning box, the electric valve is configured to allow a communication between the water supply pipeline and the liquid guiding pipe to allow cleaning water to be introduced into the cleaning box, and liquid in the cleaning box is introduced into the milk feeding pipeline of the beverage machine through the milk supply pipeline.

## Description

### TECHNICAL FIELD

The present disclosure relates to a field of beverage apparatuses, and in particular, to a cleaning water pipe for a refrigerating apparatus and a beverage machine, a refrigerating apparatus and a method of cleaning a milk pipe.

### BACKGROUND

Currently, when beverages made by a beverage machine such as a coffee machine, a tea machine and a juice machine are on sale, various auxiliary materials are usually added to enrich tastes of the beverages, and therefore, the beverage machine needs to be used in cooperation with a supply apparatus for the auxiliary materials.

When milk needs to be added to the beverage machine, the milk needs to be transported to the beverage machine, but the milk is not easily stored at normal atmospheric temperature, and especially in hot summer, the milk is easy to go bad due to high temperature, and therefore, a refrigerating apparatus needs to be used in conjunction with the beverage machine, so that the milk transported to the beverage machine can be stored in the refrigerating apparatus for a long time.

However, a part of the pipeline for transporting the milk is placed in a normal atmospheric temperature environment, and if the pipeline is not cleaned regularly, there is a great potential safety hazard. But the pipeline is often disassembled for cleaning, which can be very inconvenient and time-consuming for users and sometimes professional personnel need to operate, increasing the cost of use.

At present, although there is a solution for automatically cleaning the pipeline with water or steam, there is a problem of insufficient cleanliness of the pipeline caused by only using the water or hot steam to clean the pipeline.

### SUMMARY

A purpose of the present disclosure is to provide a cleaning water pipe for a refrigerating apparatus and a beverage machine, the cleaning water pipe being capable of achieving deep cleaning for a pipeline.

Another purpose of the present disclosure is to provide a refrigerating apparatus that is in cooperation with a beverage machine, the refrigerating apparatus being capable of achieving deep cleaning for a pipeline.

Still another purpose of the present disclosure is to provide a method of cleaning a milk pipe, the method being used in cooperation with a beverage machine, and the method being capable of achieving deep cleaning for a pipeline.

In order to realize any one of the forgoing purposes, an embodiment of the present disclosure provides a cleaning water pipe for a refrigerating apparatus and a beverage machine, including:
a water supply pipeline; and
a milk supply pipeline, connected between a milk supply source and a milk feeding pipeline of the beverage machine, and the milk supply source being installed in the refrigerating apparatus; and
the cleaning water pipe further includes a liquid guiding pipe and a cleaning box installed in the refrigerating apparatus, an end of the liquid guiding pipe is connected between the water supply pipeline and the milk supply pipeline, another end of the liquid guiding pipe is selectively connected to the milk supply source or the cleaning box to switch between a milk supply mode and a first cleaning mode, and an electric valve is installed on the water supply pipeline; and in the first cleaning mode, the another end of the liquid guiding pipe remains connected to the cleaning box, the electric valve is configured to allow a communication between the water supply pipeline and the liquid guiding pipe to allow cleaning water to be introduced into the cleaning box, and liquid in the cleaning box is introduced into the milk feeding pipeline of the beverage machine through the milk supply pipeline.

As a further improvement of an embodiment of the present disclosure, a three-way valve is installed between the water supply pipeline and the milk supply pipeline, a first connection port of the three-way valve is connected to the milk supply source through the liquid guiding pipe, a second connection port of the three-way valve is connected to the milk feeding pipeline of the beverage machine, a third connection port of the three-way valve is connected to the water supply pipeline, and the second connection port and the third connection port are kept normally-on.

As a further improvement of an embodiment of the present disclosure, the cleaning water pipe further includes a second cleaning mode; and in the second cleaning mode, the another end of the liquid guiding pipe remains connected to the milk supply source, the first connection port is closed by the three-way valve, and the electric valve is configured to allow a communication between the water supply pipeline and the third connection port.

As a further improvement of an embodiment of the present disclosure, the cleaning water pipe further includes a first connector and a second connector, the second connection port is connected to the milk supply pipeline through the first connector, and the third connection port is connected to the water supply pipeline through the second connector.

As a further improvement of an embodiment of the present disclosure, the electric valve is constructed as a diverter valve, the diverter valve includes a driving mechanism and a water-distribution joint, an inlet of the water-distribution joint is connected to a heater, an outlet of the water-distribution joint is connected to the water supply pipeline, and the driving mechanism optionally delivers hot water or steam from the heater to the water supply pipeline through the outlet of the water-distribution joint.

As a further improvement of an embodiment of the present disclosure, the liquid guiding pipe includes a first liquid guiding pipe and a second liquid guiding pipe, both an end of the first liquid guiding pipe and an end of the second liquid guiding pipe are connected between the water supply pipeline and the milk supply pipeline, and another end of the first liquid guiding pipe and another end of the second liquid guiding pipe are selectively connected to different milk supply sources, respectively, or both another end of the first liquid guiding pipe and another end of the second liquid guiding pipe are selectively connected to a same cleaning box.

The present disclosure further provides a refrigerating apparatus, including:
a case, formed with a storage chamber, and a milk supply source supplied for a beverage machine being stored in the storage chamber;
a door, movably connected to the case to open and close the storage chamber; and
a cooling system, provided in the case to supply cooling capacity for the storage chamber; and
the refrigerating apparatus further includes a liquid guiding pipe and a cleaning box installed in the storage chamber, an end of the liquid guiding pipe is connected between a water supply pipeline supplied by the beverage machine and a milk supply pipeline supplied for the beverage machine, another end of the liquid guiding pipe is selectively connected to the milk supply source and the cleaning box to switch between a milk supply mode and a first cleaning mode, and an electric valve is installed on the water supply pipeline; and in the first cleaning mode, the another end of the liquid guiding pipe remains connected to the cleaning box, the electric valve is configured to allow a communication between the water supply pipeline and the liquid guiding pipe to allow cleaning water to be introduced into the cleaning box, and liquid in the cleaning box is introduced into a milk feeding pipeline of the beverage machine through the milk supply pipeline.

As a further improvement of an embodiment of the present disclosure, the cleaning box is installed with a cavity for accommodating liquid, the storage chamber is installed with a mounting position for accommodating the cleaning box, and the cleaning box is detachably connected to the mounting position.

As a further improvement of an embodiment of the present disclosure, the cleaning box includes a channel connected to the cavity, the channel is installed with a first inlet and outlet port adjacent to the bottom of the cavity and a second inlet and outlet port located above the first inlet and outlet port, and the second inlet and outlet port is selectively connected to the water supply pipeline of the beverage machine and/or the milk feeding pipeline of the beverage machine.

As a further improvement of an embodiment of the present disclosure, the cleaning box includes a plurality of channels connected to the cavity, an end of each of a plurality of liquid guiding pipes is connected between the corresponding water supply pipeline and the corresponding milk supply pipeline, and another end of each of the plurality of liquid guiding pipes is selectively connected to the second inlet and outlet port of the corresponding channel or a liquid storage container in the storage chamber

As a further improvement of an embodiment of the present disclosure, the refrigerating apparatus further includes a pipe connector connected to the cleaning box, the pipe connector has a first port and a second port that are connected to each other, the second inlet and outlet port is connected to the first port, and the second port is selectively connected to the water supply pipeline of the beverage machine and/or the milk feeding pipeline of the beverage machine.

As a further improvement of an embodiment of the present disclosure, the case includes the front side to which the door is attached and the back side relative to the front side, the cleaning box is connected to the mounting position along a direction from front to back, and the pipe connector is located at the front of the cleaning box, and the pipe connector is connected to the cleaning box by means of a snap connection along a direction from up to down.

As a further improvement of an embodiment of the present disclosure, a three-way valve is installed between the water supply pipeline and the milk supply pipeline, a first connection port of the three-way valve is selectively connected to the milk supply source or the cleaning box through the liquid guiding pipe, a second connection port of the three-way valve is connected to the milk feeding pipeline of the beverage machine, a third connection port of the three-way valve is connected to the water supply pipeline, and the second connection port and the third connection port are kept normally-on.

As a further improvement of an embodiment of the present disclosure, the refrigerating apparatus further includes a second cleaning mode; and in the second cleaning mode, the end of the liquid guiding pipe is connected to the first connection port, the another end of the liquid guiding pipe is connected to the milk supply source, the first connection port is closed by the three-way valve, and the electric valve is configured to allow a communication between the water supply pipeline and the third connection port.

As a further improvement of an embodiment of the present disclosure, the refrigerating apparatus further includes a mounting plate installed at the back side of the cleaning box, the three-way valve is installed on the mounting plate, the first connection port of the three-way valve is exposed on the outside of the mounting plate, and the mounting position is installed on the mounting plate.

As a further improvement of an embodiment of the present disclosure, the refrigerating apparatus further includes a driving pump and a three-way valve that are installed in the storage chamber, the driving pump is used for transporting liquid in a first liquid storage container in the storage chamber to the beverage machine, a first connection port of the three-way valve is connected to a second liquid storage container through the liquid guiding pipe, and a second connection port of the three-way valve is connected to the milk feeding pipeline of the beverage machine through milk supply pipeline.

The present disclosure further provides a method of cleaning a milk pipe, including following steps:
receiving a signal indicating a first cleaning mode is selected;
controlling a communication between a water supply pipeline and a liquid guiding pipe, to fill a cleaning box with cleaning water;
closing the communication between the water supply pipeline and the liquid guiding pipe; and
opening an outlet of a beverage machine, transporting liquid in the cleaning box to a milk feeding pipeline of the beverage machine through a milk supply pipeline, and then discharging the liquid through the outlet.

As a further improvement of an embodiment of the present disclosure, the method further includes:
receiving a signal indicating a second cleaning mode is selected, closing a first connection port from a milk supply source to the milk supply pipeline, controlling a communication between the water supply pipeline and the milk supply pipeline, opening the outlet of the beverage machine, transporting water or steam from the water supply pipeline to the milk feeding pipeline of the beverage machine through the milk supply pipeline, and then discharging the water or steam through the outlet.

As a further improvement of an embodiment of the present disclosure, the method further includes: the receiving a signal indicating a first cleaning mode is selected including: receiving a signal indicating that the door of a refrigerating apparatus is open, and a signal indicating another end of the liquid guiding pipe is inserted into a corresponding inlet and outlet port of the cleaning box.

As a further improvement of an embodiment of the present disclosure, the method further includes: the receiving a signal indicating a first cleaning mode is selected including: receiving a signal indicating that the door of a refrigerating apparatus is open, and a signal indicating another end of each of a plurality of liquid guiding pipes is inserted into a corresponding inlet and outlet port of a same cleaning box.

Compared with the prior art, the liquid guiding pipe is switched from being connected to the cleaning box to being connected to the milk supply source in the embodiment of the present disclosure, so as to switch from the milk supply mode to the first cleaning mode, and deep cleaning for a milk pipe is achieved without any other complex cleaning pipelines, which is easy to operate, thus ensuring safety and reliability for users to use. Further, using the first cleaning mode may automatically clean the milk supply pipeline including the liquid guiding pipe and the milk feeding pipeline of the beverage machine, i.e., all pipelines through which the milk flows, except for the milk supply source, may be cleaned automatically.

### BRIEF DESCRIPTION OF THE DRAWINGS

FIG. 1 is a schematic diagram of a refrigerating apparatus after the door of the refrigerating apparatus is opened according to a preferred embodiment of the present disclosure.
FIG. 2 is an exploded schematic diagram of the refrigerating apparatus shown in FIG. 1.
FIG. 3 is a schematic diagram of the refrigerating apparatus in a first cleaning mode shown in FIG. 1.
FIG. 4 is a cross-sectional view taken along the line A-A in FIG. 1.
FIG. 5 is a three-dimensional schematic diagram of an inner pot of the refrigerating apparatus shown in FIG. 1.
FIG. 6 is a three-dimensional schematic diagram of a mounting plate of the refrigerating apparatus shown in FIG. 1
FIG. 7 is an exploded schematic diagram of a cleaning box and a pipe connector of the refrigerating apparatus shown in FIG. 1.
FIG. 8 is a schematic diagram of another structure of a cleaning box of the refrigerating apparatus shown in FIG. 1.
FIG. 9 is a schematic diagram of a cleaning water pipe in a first cleaning mode for a refrigerating apparatus and a beverage machine according to a preferred embodiment of the present disclosure.
FIG. 10 is a schematic diagram of a cleaning water pipe in a second cleaning mode for a refrigerating apparatus and a beverage machine according to a preferred embodiment of the present disclosure.
FIG. 11 is a schematic diagram of a part of the cleaning water pipe involved in the refrigerating apparatus shown in FIG. 10.
FIG. 12 is a schematic diagram of a refrigerating apparatus after the door of the refrigerating apparatus is opened according to another preferred embodiment of the present disclosure.
FIG. 13 is a three-dimensional schematic diagram of a mounting plate of the refrigerating apparatus shown in FIG. 12.
FIG. 14 is a schematic diagram of a refrigerating apparatus after the door of the refrigerating apparatus is opened according to still another preferred embodiment of the present disclosure.
FIG. 15 is a three-dimensional schematic diagram of a mounting plate of the refrigerating apparatus shown in FIG. 14.
FIG. 16 is a schematic diagram of a cleaning water pipe in a first cleaning mode for a refrigerating apparatus and a beverage machine according to another preferred embodiment of the present disclosure.
FIG. 17 is a schematic diagram of a cleaning water pipe in a second cleaning mode for a refrigerating apparatus and a beverage machine according to another preferred embodiment of the present disclosure.
FIG. 18 is a schematic diagram of a refrigerating apparatus after the door of the refrigerating apparatus is opened according to still yet another preferred embodiment of the present disclosure.
FIG. 19 is a three-dimensional schematic diagram of a mounting plate of the refrigerating apparatus shown in FIG. 18.
FIG. 20 is a three-dimensional schematic diagram of a refrigerating apparatus after the door of the refrigerating apparatus is opened according to another preferred embodiment of the present disclosure.
FIG. 21 is an exploded schematic diagram of the refrigerating apparatus shown in FIG. 20.
FIG. 22 is a three-dimensional schematic diagram of a mounting plate of the refrigerating apparatus shown in FIG. 20.
FIG. 23 is a main view of the refrigerating apparatus shown in FIG. 20 without the door
FIG 24 is a cross-sectional view taken along the line B-B in FIG. 23.

### DETAILED DESCRIPTIONS OF THE EMBODIMENTS

The followings provide a detailed description of the present disclosure with reference to the embodiments shown in the accompanying drawings. But these embodiments are not intended to limit the present disclosure, any structural, methodological, or functional changes made by a person skilled in the art based on these embodiments shall fall within the protection scope of the present disclosure. It should be understood that the terms of representing spatial relative positions such as "up", "down", "outside", and "inside" are used for illustrative purposes to describe a relationship between a unit and another unit, or a feature and another feature shown in the accompanying drawings. The terms of representing the spatial relative positions may be intended to include different orientations except for the orientations in the accompanying drawings when equipment are in use or at work.

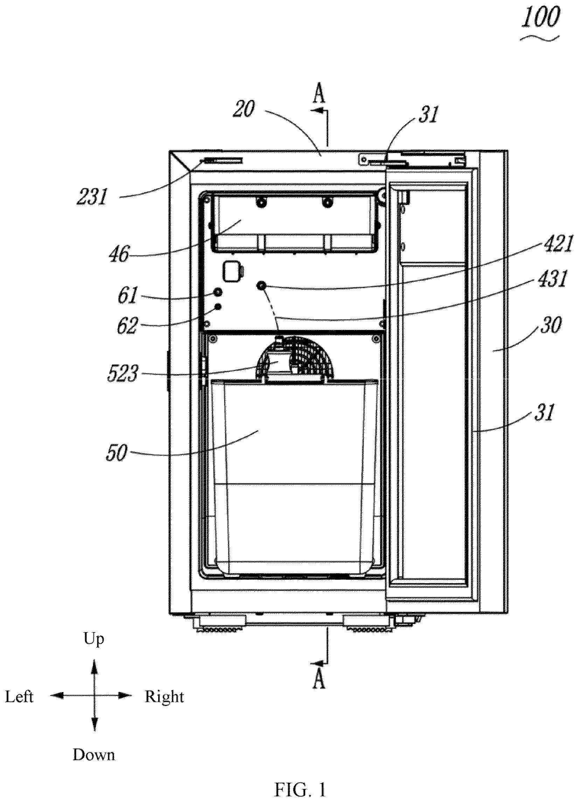

Equipment may be orientated in other ways (rotating 90 degrees or other orientations), which correspondingly explains the terms related to a space used in the specification. For example, in order to describe conveniently in the present disclosure, referring to FIG. 1, when a refrigerating apparatus is in use normally, a direction towards the ground is downwards, and a direction away from the ground is upwards; a direction parallel to the ground is a horizontal direction, and a direction perpendicular to the horizontal direction is a vertical direction; and a side close to users is a front side, a side away from the users is a back side, and a direction perpendicular to a front-back side and the vertical direction is a left-right side.

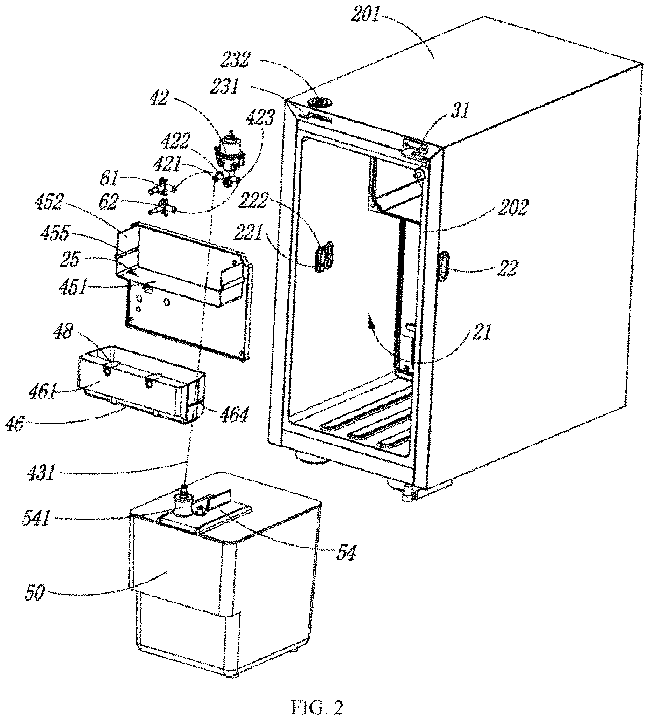

Referring to FIG. 1 and FIG. 2, a preferred embodiment of the present disclosure provides a refrigerating apparatus 100, the refrigerating apparatus 100 is usually used in cooperation with a beverage machine, enriching types of beverages of the beverage machine. The refrigerating apparatus 100 is preferably designed to provide milk for the beverage machine, the milk is usually stored in the refrigerating apparatus 100, so that the milk is kept in a low-temperature environment, thus prolonging storage time of the milk, and a temperature of the milk is stable, thus ensuring consistency in taste of the beverages.

The refrigerating apparatus includes a case 20, a door 30 and a cooling system, and the case 20 is formed with a storage chamber 21; and the door 30 is movably connected to the case 20 to open and close the storage chamber 21, and the cooling system is provided in the case 20 to supply cooling capacity for the storage chamber 21. The door 30 is pivotally connected to the case 20 through a hinge 31, and liquid may be added after the door 30 is opened. A magnetic sealing ring is installed between the door 30 and the case 20 to prevent a leakage of cool air in the storage chamber 21 when the door 30 is closed. In addition, the case is installed with a locking member 231 and an unlocking portion 232 acting on the locking member 231, the door 30 is locked on the case 20 by the locking member 231 to prevent non-specific persons from opening the case 20 at will, so as to improve food safety of the beverages. A tool may be inserted into the unlocking portion 232 to drive the locking member 231 to move to release the door 30.

At least one side wall of the case 20 is installed with a delivery port 22 penetrating through the case 20, the delivery port 22 may be a single hole passed through by a plurality of pipes, or a plurality of holes passed through by a plurality of pipes one-to-one correspondence. Liquid in the storage chamber 21 is transported to the beverage machine through the pipe passing through the delivery port 22. A number of the delivery ports 22 may be one, and one delivery port is passed through by all of the pipes. Preferably, the number of the delivery ports 22 is two in this embodiment, the two delivery ports 22 are installed on two opposite side walls in the left-right side of the case 20, respectively, which is convenient to transport liquid at both sides of the refrigerating apparatus simultaneously, or is convenient for the pipe to pass out from a corresponding side regardless of which side of the refrigeration apparatus the beverage machine is installed on. The delivery port 22 is installed with a sealing sleeve 221 and a sealing plug 222, the delivery port 22 is passed through by the sealing sleeve 221, and edges of two ends of the delivery port 22 are covered by the sealing sleeve 221. The sealing plug 222 is installed on an inner side of a side wall of the case, i.e., the sealing plug 222 is located inside the storage chamber 21, and the sealing plug 222 is inserted into the sealing sleeve 221 to seal the delivery port 22. Preferably, the sealing plug 222 and the sealing sleeve 221 may be integrally formed, which is convenient to use and prevents loss of the sealing plug 222.

In addition, when the refrigerating apparatus 100 is used in cooperation with the beverage machine, auxiliary materials with various tastes are stored in a liquid storage container in the case 20. The liquid storage container 50 may be an original packaging of liquid, such as a milk box. Preferably, the liquid storage container 50 is specifically set for storing milk in the refrigerating apparatus, the milk may be added to the liquid storage container 50, and when the milk needs to be transported, the milk in the liquid storage container 50 may be sucked out by a milk frother in the beverage machine to make required hot milk or milk froth. The liquid storage container serves as a milk supply source for the beverage machine, and the milk in the liquid storage container 50 may be directly supplied for the beverage machine through the pipes. The liquid storage container 50 is installed with a box cover 54 operable to be opened and closed, the box cover 54 is preferred to slide along an upper part of the liquid storage container 50 to open and close an opening of the liquid storage container 50, and the pipe directly passes through the box cover 54 to extend into the liquid storage container 50. Preferably, the box cover 54 is installed with a sealing member 541 inserted into the opening, and the pipe passes through the sealing member 541. Alternatively, a connector is inserted into each of two ends of the sealing member 541, a liquid guiding pipe 431 used to transport liquid to the beverage machine is connected to an external connector of the liquid storage container 50, and an internal connector may be connected to another pipe extending into the bottom of the liquid storage container 50. The pipes are connected to the box cover 54, so that when the box cover 54 is opened to add milk or the box cover 54 is closed, the pipes are driven to move together with the box cover 54, and there is no need to take out the pipes, which is faster and more convenient.

In this embodiment, the refrigerating apparatus 100 further includes a cleaning box 46 installed in the storage chamber, the cleaning box 46 may be added with a cleaning concentrate, a cleaning pill, or a cleaning solution for automatic deep cleaning of pipelines. If the cleaning box 46 is added with a common cleaning solution, the common cleaning solution may directly flow out of the pipelines to clean the pipelines; and if the cleaning box 46 is added with the cleaning concentrate or the cleaning pill, water transported inside a coffee machine may be used to dilute or dissolve the cleaning concentrate or the cleaning pill firstly, and then diluted or dissolved cleaning concentrate or cleaning pill flows out of the pipelines to realize cleaning of the pipelines.

Herein, an end of the liquid guiding pipe 431 is connected between a water supply pipeline supplied by the beverage machine and a milk supply pipeline supplied for the beverage machine, another end of the liquid guiding pipe 431 is selectively connected to the milk supply source and the cleaning box 46 to switch between a milk supply mode and a first cleaning mode, and an electric valve 13 is installed on the water supply pipeline 11. In the first cleaning mode, the another end of the liquid guiding pipe 431 remains connected to the cleaning box 46, the electric valve 13 is configured to allow a communication between the water supply pipeline and the liquid guiding pipe 431 to allow cleaning water to be introduced into the cleaning box 46, and liquid in the cleaning box 46 is introduced into a milk feeding pipeline of the beverage machine through the milk supply pipeline, and then the liquid is transported to a foaming apparatus of the beverage machine, and finally the liquid is discharged through an outlet of the beverage machine, achieving cleaning of all pipelines from a milk inlet port to a milk outlet port. Since the liquid is input into the cleaning box 46 through the liquid guiding pipe 431, and the liquid is output from the cleaning box 46 through the liquid guiding pipe 431, when the liquid is output from the cleaning box 46, the communication between the water supply pipeline 11 and the liquid guiding pipe 431 may be restricted by the electric valve 13.

The liquid guiding pipe 431 is switched from being connected to the cleaning box 46 to being connected to the milk supply source, so as to switch between the milk supply mode and the first cleaning mode, and deep cleaning for a milk pipe may be realized without complex cleaning pipelines, which is easy to operate, thus ensuring safety and reliability for users to use.

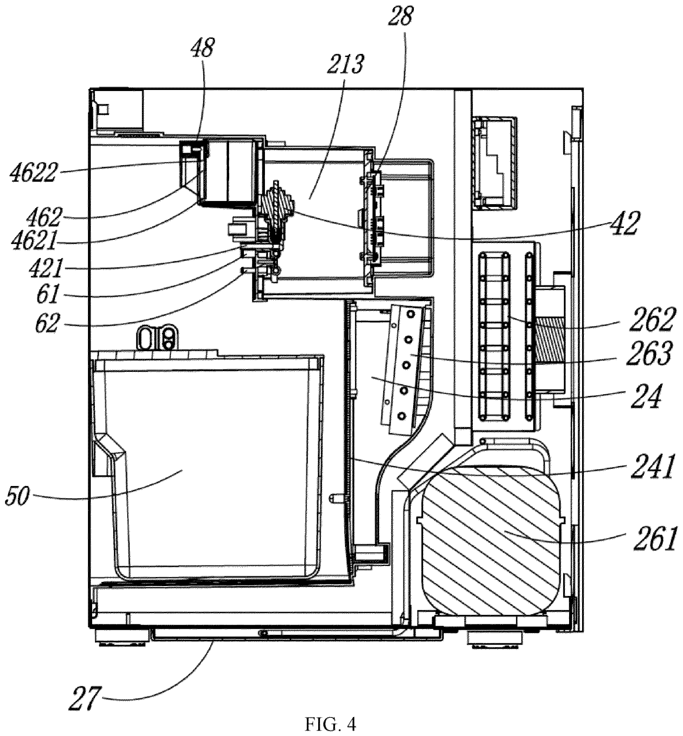

Referring to FIG. 2 and FIG. 4, the cleaning box 46 is installed with a cavity for accommodating liquid, the storage chamber 21 is installed with a mounting position 25 for accommodating the cleaning box 46, and the cleaning box 46 is detachably connected to the mounting position 25. The cleaning box 46 includes a channel 462 connected to the cavity, the channel 462 is installed with a first inlet and outlet port 4621 adjacent to the bottom of the cavity and a second inlet and outlet port 4622 located above the first inlet and outlet port 4621, and the second inlet and outlet port 4622 is selectively connected to the water supply pipeline of the beverage machine and/or the milk feeding pipeline of the beverage machine. The storage chamber 21 of the refrigerating apparatus is installed with a detachable cleaning box 46, the cleaning box 46 is used for storing cleanser water, and when cleaning is needed, only the liquid guiding pipe 431 connected to the liquid storage container 50 needs to be took out to connect to the second inlet and outlet port of the cleaning box 46, so that the cleanser water may flow along the original output path, realizing cleaning of pipelines.

Specifically, the liquid guiding pipe 431 may be selectively connected to the cleaning box 46. When it is necessary to deeply clean pipelines, the liquid guiding pipe 431 is separated from the external connector of the liquid storage container 50, and then the liquid guiding pipe 431 is connected to the second inlet and outlet port 4622 of the cleaning box 46, so that the liquid guiding pipe 431 is connected to the interior of the cleaning box 46, the cleaning solution in the cleaning box 46 may be transported to the beverage machine through the liquid guiding pipe 431, and then the cleaning solution is discharged through the outlet of the beverage machine, cleaning all pipelines through which the milk flows, including pipelines where the liquid guiding pipe 431 is located, except for pipelines inserted into the interior of the liquid storage container 50.

Further, the storage chamber 21 of the refrigerating apparatus is installed with a three-way valve 42, the three-way valve 42 is installed between the water supply pipeline and the milk supply pipeline of the beverage machine, a first connection port 421 of the three-way valve 42 is selectively connected to the liquid storage container 50 or the cleaning box 46 through the liquid guiding pipe 431, a second connection port 422 of the three-way valve is connected to the milk feeding pipeline of the beverage machine through pipelines, the milk feeding pipeline is used for transporting liquid from the second connection port 422 to the foaming apparatus of the beverage machine, and the liquid is discharged through the outlet of the beverage machine after the liquid in the foaming apparatus is mixed. A third connection port 423 of the three-way valve is used to connect to the water supply pipeline in the beverage machine, and the liquid guiding pipe 431 is selectively connected to the second inlet and outlet port of the cleaning box 46. Disposal of the three-way valve 42 may make a connection of the pipelines neater, and cleaning water may be introduced into the cleaning box 46 through the water supply pipeline of the beverage machine, so that only a cleanser or a cleaning piece needs to be stored inside the cleaning box 46. Cleaning water is introduced into the cleaning box 46 through the water supply pipeline and the first connection port 421 of the three-way valve 42 to dilute the cleanser or the cleaning piece, and then cleaner water is transported to the beverage machine through the three-way valve 42 and the liquid guiding pipe 431, and finally the cleaner water is discharged through the outlet of the beverage machine, so that cleaning of pipelines outside and inside the beverage machine is achieved. A cleaning process may be repeated several times, for example, the pipelines are cleaned by cleaning water again after the pipelines are cleaned by the cleanser, so as to avoid a residual of the cleanser in the pipelines. A cleaning function by the cleanser may be reminded on an operation panel based on specific parameters, making it convenient for users to operate to clean. The cleaning of the cleanser may further clean the liquid guiding pipe 431 installed between the three-way valve 42 and the liquid storage container 50, making it safer for users to use, and there is no need to detach the liquid guiding pipe 431 for manual cleaning, which is convenient to use, thus saving manpower.

Herein, the cleaning box 46 is installed above the three-way valve 42, the three-way valve 42 is connected to the back side of a mounting plate 45, a mounting cavity 213 is formed at the back side of the mounting plate 45, and the three-way valve 42 is confined in the mounting cavity 213 by the mounting plate 45. The cleaning box 46 is installed above the three-way valve 42, which may make full use of a storage space, and is convenient for users to add cleaning materials such as a cleaning solution or a cleaning piece, so that the cleaning materials may be used to achieve deep cleaning of pipelines.

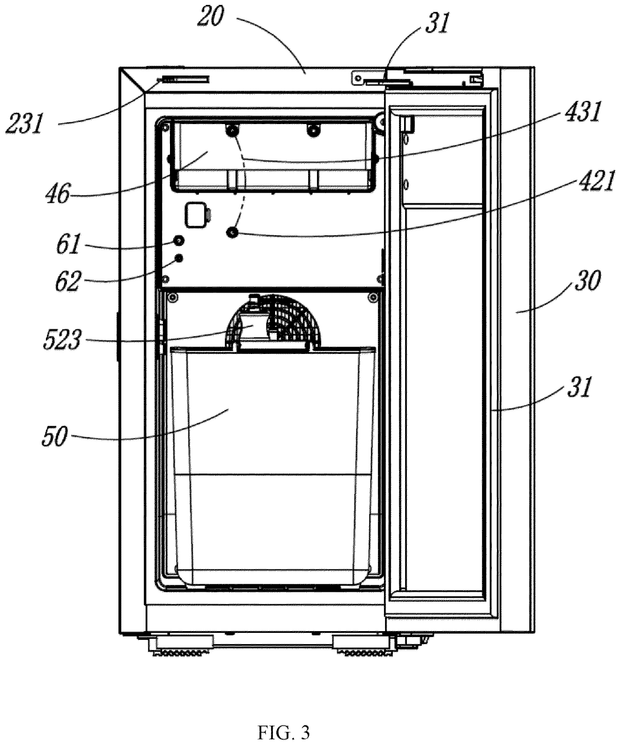

The second connection port 422 and the third connection port 423 of the three-way valve 42 are kept normally-on, the first connection port 421 is selectively opened or closed by the three-way valve 42, and flow of liquid may be adjusted by controlling a degree of opening of the first connection port 421. FIG. 1 shows the milk supply mode, an end of the liquid guiding pipe 431 is connected to the liquid storage container 50, and another end of the liquid guiding pipe 431 is connected to the first connection port 421, so that milk in the liquid storage container 50 is transported to the beverage machine through the first connection port 421 and the second connection port 422 of the three-way valve 42. FIG. 3 shows the first cleaning mode, the end of the liquid guiding pipe 431 is pulled out from the liquid storage container 50, and then the end of the liquid guiding pipe 431 is connected to the second inlet and outlet port of the cleaning box 46, and the another end of the liquid guiding pipe 431 remains connected to the first connection port 421, so that cleaning water is introduced into the cleaning box 46 through the three-way valve 42 and the water supply pipeline, and then the cleaning water is transported from the cleaning box 46 to the beverage machine through the liquid guiding pipe 431 and the three-way valve 42. A connection and a disconnection of the three-way valve 42 and the water supply pipeline may be controlled by a controller in the beverage machine, thus saving cost.

Further, this also includes a second cleaning mode, and in the second cleaning mode, the end of the liquid guiding pipe 431 is connected to the first connection port 421, the another end of the liquid guiding pipe 431 is connected to the milk supply source, the first connection port 421 is closed by the three-way valve 42, and the electric valve is configured to allow a communication between the water supply pipeline and the third connection port 423. When a milk pipe needs to be cleaned in the second cleaning mode, the first connection port 421 connected to the liquid guiding pipe 431 is closed by the three-way valve 42, cleaning water/steam is supplied to the third connection port 423 of the three-way valve 42 through the water supply pipeline, and then the cleaning water/steam flows into the milk feeding pipeline of the beverage machine through the second connection port 422, and then the cleaning water/steam flows into the foaming apparatus, and finally the cleaning water/steam is discharged through the outlet of the beverage machine. Automatic cleaning of the milk pipe of the beverage machine may be realized by controlling the three-way valve 42, and by connecting and disconnecting the water supply pipeline, which provides users with great convenience.

In this embodiment, the first connection port 421 is closed, i.e., a fluid communication between the liquid storage container 50 and the beverage machine is cut off, so that liquid in the liquid storage container 50 is restricted to transport to the beverage machine. When milk needs to be supplied to the beverage machine, the water supply pipeline is cut off, but at this time, the third connection port 423 of the three-way valve 42 connected to the water supply pipeline is still connected to the second connection port 422 connected to the milk feeding pipeline; and the first connection port 421 is controlled to open by the three-way valve 42, and then through the Venturi principle adopted by the foaming apparatus, milk in the liquid storage container 50 flows into the foaming apparatus via the liquid guiding pipe 431, the first connection port 421, the second connection port 422 and the milk feeding pipeline, and finally liquid in a form of milk/milk froth is discharged through the outlet of the beverage machine. In this way, it is simpler to achieve automatic cleaning of the milk pipe, and a cleaning function may respond to a choice of users on the operation panel or may be automatically triggered by a controller based on specific parameters. The milk pipe is automatically cleaned, thus improving safety of the use of a fresh-keeping apparatus and the beverage machine, and there is no need to detach pipelines manually or replace pipelines frequently, thus saving cost and manpower.

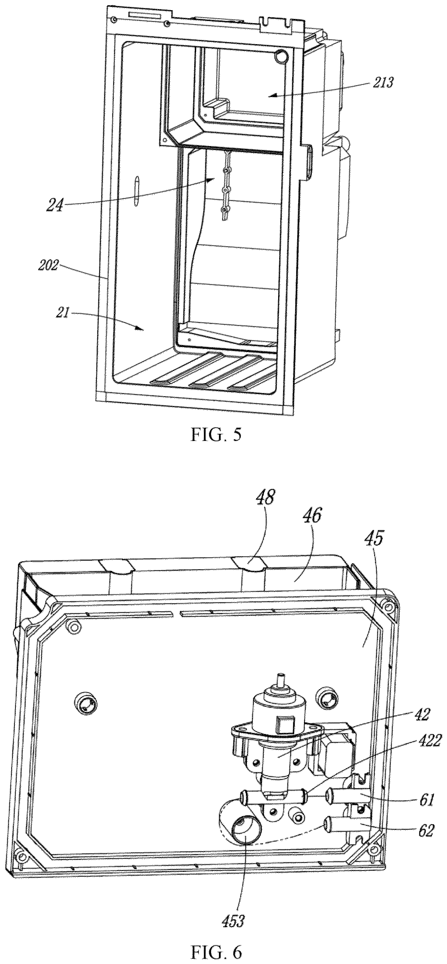

Referring to FIG. 2 to FIG. 6, in order to facilitate a connection between pipelines and the three-way valve 42, the refrigerating apparatus further includes a first connector 61 and a second connector 62, the first connector 61 and the second connector 62 are installed side-by-side along a direction from up to down, the first connector 61 and the second connector 62 are constructed as L-shaped connectors, the second connection port 422 of the three-way valve 42 is connected to the milk feeding pipeline of the beverage machine through the first connector 61, and the third connection port 423 of the three-way valve is connected to the water supply pipeline through the second connector 62. Disposal of the two connectors reduces the length of the pipe and makes the connection of the whole pipelines more compact. The storage chamber 21 is installed with a mounting plate 45 for mounting the three-way valve 42, the first connector 61 and the second connector 62 may also be connected to the mounting plate 45, and both the liquid guiding pipe 431 or a pipeline for achieving a communication between the liquid storage container 50 and the beverage machine and a pipeline connected to the water supply pipeline may be directly connected to the corresponding connection port or connector on the mounting plate 45, so that the connection of the pipelines is more simple and convenient.

Further, the second connection port 422 of the three-way valve corresponds to a position where an outlet of the first connector 61 is located, the third connection port 423 of the three-way valve is staggered with a position where an outlet of the second connector 61 is located, the mounting plate 45 is installed with a guide post 453, and a pipe connected between the third connection port 423 and the outlet of the second connector 61 bypasses along a circumferential direction of the guide post 453. The pipe bypasses the guide post 453, so that a position of the pipe is fixed to prevent the pipe from being bent during a transporting process, thus making the connection between the pipe and the connector more reliable.

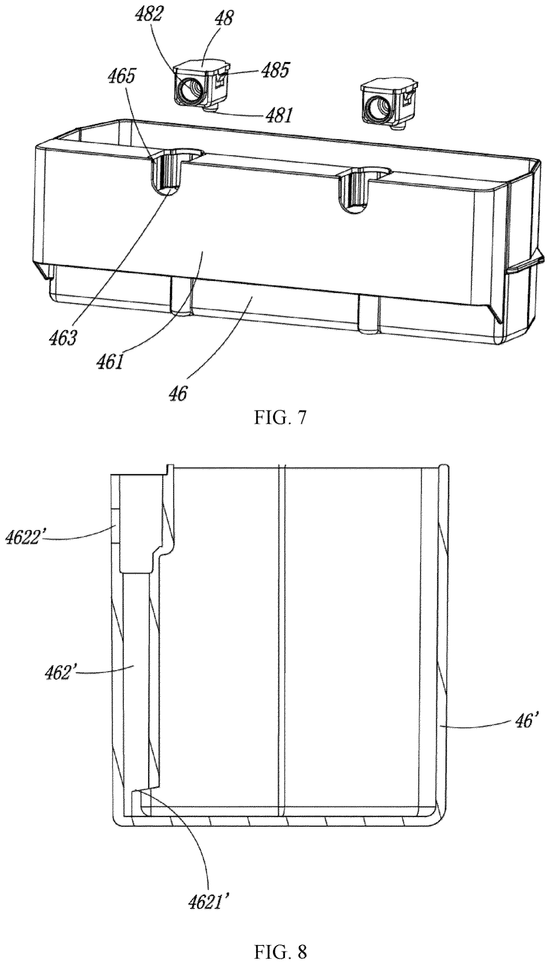

Continuing with reference to FIG. 2 and FIG. 7, the case 20 is installed with the front side to which the door is attached and the back side relative to the front side, the cleaning box 46 is connected to the mounting position 25 along a direction from front to back, a pipe connector 48 is connected to the cleaning box, the pipe connector 48 has a first port 481 and a second port 482 that are connected to each other, the second inlet and outlet port 4622 is connected to the first port 481, and the second port 482 is selectively connected to the water supply pipeline of the beverage machine and/or the milk feeding pipeline of the beverage machine. The pipe connector 48 is located at the front of the cleaning box, and the pipe connector 48 is connected to the cleaning box 46 by means of a snap connection along a direction from up to down. The cleaning box 46 and the pipe connector 48 may be manufactured independently, and structures of the cleaning box 46 and the pipe connector 48 are simple and convenient to assemble. Disposal of the pipe connector 48 may also make a sealing performance of the connection between the cleaning box 46 and the liquid guiding pipe 431 better.

A flanging 461 is installed at the front side of the cleaning box 46, a channel 462 connected to the cavity of the cleaning box is installed on the inner wall of the cleaning box 46, and the pipe connector 48 is connected between the flanging 461 and the cleaning box 46 by means of a snap connection. Disposal of the flanging 461 may not only form a handle that is convenient for users to hold, but also provide a space, between the flanging 461 and the inner wall of the cleaning box 46, for mounting the pipe connector 48, so that the connection between the pipe connector 48 and the cleaning box 46 is more compact. The pipe connector 48 is constructed as an L-shaped connector, the first port 481 is disposed vertically, so as to facilitate the communication between the channel 462 on the cleaning box 46 and the first port 481; and the second port 482 is disposed horizontally, and connecting the liquid guide 431 to the second port 482 may make the liquid guide 431 connect to the second inlet and outlet port 4622, so that a connection of the liquid guide 431 is more convenient and reliable.

Herein, a countersink 463 is installed between the flanging 461 and the inner wall of the cleaning box 46, openings 465 are installed in each of the two opposing side walls within the countersink 463, the pipe connector 48 is installed with a clamping hook 485, the pipe connector 48 is inserted downwards into the countersink 463, and the clamping hook 485 falls into the opening 465 to achieve a snap connection between the pipe connector 48 and the cleaning box 46. The pipe connector 48 and the cleaning box 46 are formed independently before being connected, which is low-cost and easy to assemble.

Referring to FIG. 8, another structure of a cleaning box 46' is shown, the cleaning box 46' is only installed with a channel 462' connected to a cavity, the channel 462' is installed with a first inlet and outlet port 4621' adjacent to the bottom of the cavity and a second inlet and outlet port 4622' located above the first inlet and outlet port 4621', and the second inlet and outlet port 4622' is selectively connected to the water supply pipeline of the beverage machine and/or the milk feeding pipeline of the beverage machine. The liquid guiding pipe 431 is directly connected to the second inlet and outlet port 4622', so that a construction of the cleaning box 46' is simpler. Further, the mounting plate 45 is installed at the back side of the cleaning box 46', the three-way valve 42 is installed on the mounting plate 45 and is located below the cleaning box 46', the first connection port 421 of the three-way valve 42 is exposed on the outside of the mounting plate 45, and the mounting position 25 is installed on the mounting plate 45. The mounting position 25 includes a supporting portion extending along a horizontal direction, and the supporting portion includes a bottom plate 451 and side plates 452 located on both sides of the bottom plate, which may be U-shaped. The side plate 452 is installed with a slide groove 455 extending along the horizontal direction, the slide groove 455 protrudes outwards from the side plate 452, the cleaning box 46' is installed with a slider 464, and the slider 464 moves along the slide groove 455 to guide the cleaning box 46' to mount at the mounting position 25.

Continuing to refer to FIG. 1 to FIG. 5, the case 20 includes a housing 201 and an inner pot 202 integrated into the housing 201, the storage chamber 21 and a cooling chamber 24 located behind the storage chamber 21 are formed by the inner pot 202, a part of the cooling system is provided in the cooling chamber 24, the storage chamber 21 and the cooling chamber 24 are spaced by a back plate 241, the storage chamber 21 includes a mounting cavity 213 located above the cooling chamber 24, the three-way valve 42 is installed in the mounting cavity 213, and the front end surface of the mounting cavity 213 is located between the front end surface of the case 20 and the front end surface of the cooling chamber 24. In this way, the front space outside the mounting cavity 213 may also be used for accommodating goods. The interior of the mounting cavity 213 may be spaced into a front cavity and a back cavity by a plate 28, the three-way valve 42 may be installed in the front cavity, and an electric component such as a circuit board may be installed in the back cavity. Arrangement of each space in the inner pot 202 may improve space utilization and ensure that contents in the inner pot 202 are more compact, so as to not increase a whole volume of the refrigerating apparatus.

Herein, the cooling system is preferred to be a sealed cooling system used for performing a vapor compression cycle, and the vapor compression cycle is used for cooling air in the storage chamber 21. The sealed cooling system includes a compressor 261, a condenser 262, an expansion apparatus, and an evaporator 263 that are fluidly connected in series and filled with refrigerant. In the sealed cooling system, gas refrigerant flows into the compressor 261, and the compressor 261 operates to increase a pressure of the refrigerant. Compression of the refrigerant increases temperature of the refrigerant, and the temperature is decreased when the gas refrigerant passes through the condenser 262. In the condenser 262, the gas refrigerant exchanges heat with ambient air, so as to cool the refrigerant and condense the refrigerant into a liquid state.

The expansion apparatus (such as a mechanical valve, a capillary, an electronic expansion valve or other limiting apparatus) receives liquid refrigerant from the condenser 262. The liquid refrigerant enters into the evaporator 263 from the expansion apparatus. When the liquid refrigerant flows into the evaporator 263 from the expansion apparatus, a pressure of the liquid refrigerant decreases and evaporates. Due to pressure drop and phase change of the refrigerant, the evaporator 263 is cold compared to the storage chamber 21. It can be seen that cooling air is generated to cool the storage chamber 21. Therefore, the evaporator 263 is a heat exchanger, and the heat exchanger transfers heat from the air passing through the evaporator 263 to the refrigerant flowing through the evaporator 263. As it will be understood by a person skilled in the art that the cooling system is not limited to the above-mentioned sealed cooling system, but can also be a semiconductor cooling system, an electronic cooling sheet, etc., all of which may achieve cooling of the storage chamber 21.

In addition, a drain pan 27 is installed below the case 20, condensed water discharged through the bottom of the cooling chamber 24 may be discharged into the drain pan 27 through pipelines, and the drain pan 27 may be installed with a heater wire for heating and evaporating ponding in the drain pan 27.

The storage chamber 21 includes a storage space located in front of the mounting cavity 213 and below the mounting cavity 213, the liquid storage container 50 is located in the storage space, the three-way valve 42 is installed on the mounting plate 45, and the first connection port 421 of the three-way valve 42 is exposed on the outside of the mounting plate 45. The connection port for connecting pipelines is installed outside of the mounting plate 45, and when the pipelines are connected, the pipelines just need to be connected to the corresponding connection port, so that a connection is very convenient when the pipelines are connected or replaced.

The forgoing liquid guiding pipe and pipelines between various connectors or various connection ports may be made of flexible materials with a certain elasticity, such as a silicon hose, or a rubber hose, which is easy to insert into the connector or the connection port and has a better sealing performance.

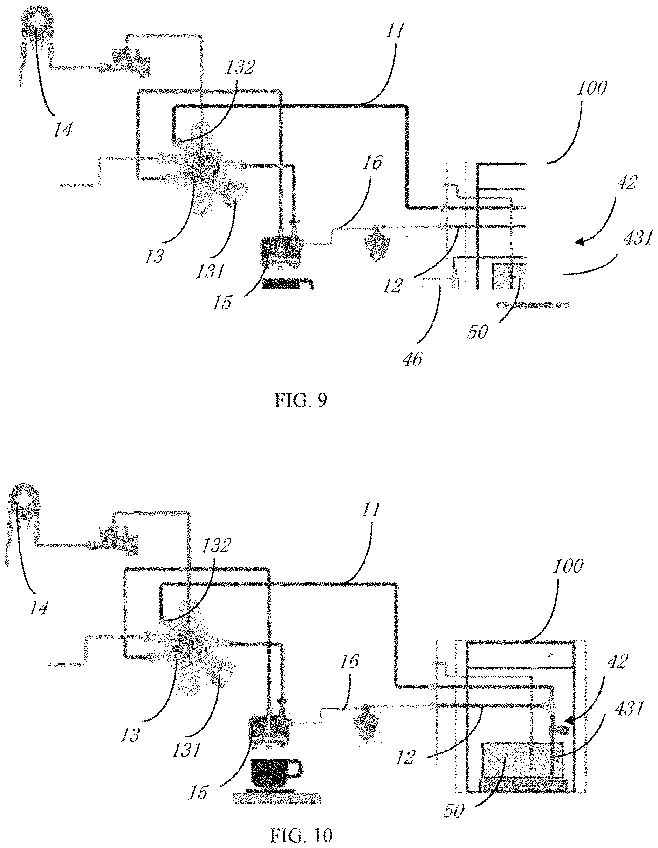

Referring to FIG. 9, provided is a cleaning water pipe for a refrigerating apparatus and a beverage machine, including a water supply pipeline 11 and a milk supply pipeline 12, the milk supply pipeline 12 is connected between a milk supply source and a milk feeding pipeline 16 of the beverage machine, and the milk supply source is installed in the refrigerating apparatus. The cleaning water pipe for the refrigerating apparatus and the beverage machine further includes a liquid guiding pipe 431 and a cleaning box 46 installed in the refrigerating apparatus, an end of the liquid guiding pipe 431 is connected between the water supply pipeline 11 and the milk supply pipeline 12, another end of the liquid guiding pipe 431 is selectively connected to the milk supply source or the cleaning box 46 to switch between a milk supply mode and a first cleaning mode, and an electric valve 13 is installed on the water supply pipeline 11. In the first cleaning mode shown in FIG. 9, the electric valve 13 is configured to allow a communication between the water supply pipeline 11 and the liquid guiding pipe 431 to allow cleaning water to be introduced into the cleaning box 46, and liquid in the cleaning box 46 is introduced into the milk feeding pipeline of the beverage machine through the milk supply pipeline 12. Since the liquid is input into the cleaning box 46 through the liquid guiding pipe 431, and the liquid is output from the cleaning box 46 through the liquid guiding pipe 431, when the liquid is output from the cleaning box 46, the communication between the water supply pipeline 11 and the liquid guiding pipe 431 may be restricted by the electric valve 13. The liquid guiding pipe 431 may selectively be connected to the milk supply source or the cleaning box 46, so that arrangement of a water pipe is simpler, and cleaning of all other pipelines except for pipelines inside the milk supply source may be achieved, which is safe and reliable for users to use.

Further, a three-way valve 42 is installed between the water supply pipeline 11 and the milk supply pipeline 12, a first connection port 421 of the three-way valve 42 is connected to the milk supply source through the liquid guiding pipe 431, a second connection port 422 of the three-way valve 42 is connected to the milk feeding pipeline of the beverage machine, a third connection port 423 of the three-way valve 42 is connected to the water supply pipeline 11, and the second connection port 422 and the third connection port 423 are kept normally-on. Disposal of the three-way valve 42 may make the connection of the pipelines more compact, convenient and faster.

Preferably, the cleaning water pipe for the refrigerating apparatus and the beverage machine further includes a second cleaning mode, when the cleaning water pipe is in the second cleaning mode, the another end of the liquid guiding pipe 431 remains connected to the milk supply source, the first connection port 421 is closed by the three-way valve 42, and the electric valve 13 is configured to allow a communication between the water supply pipeline 11 and the third connection port 423. The second cleaning mode may be a high-frequency cleaning mode, for example, cleaning may be performed after milk drinks is made every time or every several times, and the automatic cleaning method allows the user to save effort.

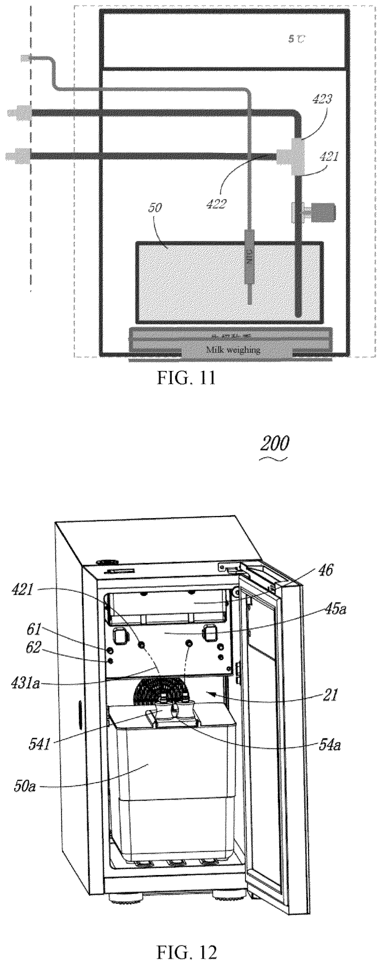

Referring to FIG. 10 and FIG. 11, in the second cleaning mode, the cleaning water pipe includes a water supply pipeline 11 and a milk supply pipeline 12, the water supply pipeline 11 is supplied by the beverage machine, the milk supply pipeline 12 is connected between a milk supply source and a milk feeding pipeline 16 of the beverage machine, and the milk supply source is installed in the refrigerating apparatus 100. The cleaning water pipe further includes a three-way valve 42 installed between the water supply pipeline 11 and the milk supply pipeline 12, the first connection port 421 of the three-way valve 42 is connected to the milk supply source, the second connection port 422 of the three-way valve 42 is connected to the milk supply pipeline 12, the third connection port 423 of the three-way valve 42 is connected to the water supply pipeline 11, and the second connection port 422 and the third connection port 423 are kept normally-on. The electric valve 13 is installed on the water supply pipeline 11, and based on closing or opening of the first connection port 421, a communication between the water supply pipeline 11 and the third connection port 423 is selectively allowed or restricted by the electric valve 13.

When the milk pipe needs to be cleaned, the first connection port 421 connected to the liquid guiding pipe 431 is closed by the three-way valve 42, an outlet of the water-distribution joint 132, connected to the water supply pipeline 11, is opened by a driving mechanism 131 of the electric valve 13, cleaning water/steam from the heater 14 is transported to the water supply pipeline 11 through the outlet of the water-distribution joint 132, and then the cleaning water/steam is supplied to the third connection port 423 of the three-way valve 42, and then the cleaning water/steam flows into the milk feeding pipeline 16 of the beverage machine through the second connection port 422, and then the cleaning water/steam flows into the forming apparatus 15 of the beverage machine, and finally the cleaning water/steam is discharged through the outlet of the beverage machine.

When milk needs to be supplied for the beverage machine, the first connection port 421 connected to the liquid guiding pipe 431 is opened by the electric valve 13, the outlet of the water-distribution joint 132, connected to the water supply pipeline 11, is closed by the driving mechanism 131 of the electric valve 13, i.e., the water supply pipeline 11 for flowing the cleaning water/steam is cut off, but at this time, the third connection port 423 of the three-way valve 42 connected to the water supply pipeline 11 is still connected to the second connection port 422 connected to the milk feeding pipeline, and then through the Venturi principle adopted by the foaming apparatus 15, milk in the liquid storage container 50 flows into the foaming apparatus 15 via the liquid guiding pipe 431, the first connection port 421, the second connection port 422, the milk supply pipeline 12 and the milk feeding pipeline 16, and finally liquid in a form of milk/milk froth is discharged through the outlet of the beverage machine.

Only one connection port needs to be controlled to open and close by the three-way valve 42 to cooperate with the beverage machine for milk pipe cleaning, so that controlling is simpler, which may not only achieve cleaning of the milk feeding pipeline in the beverage machine, but also achieve cleaning of pipelines between the milk feeding pipeline and the three-way valve 42, improving safety in use for users.

In a specific embodiment, the electric valve 13 is constructed as a diverter valve, the diverter valve includes the driving mechanism 131 and the water-distribution joint 132, an inlet of the water-distribution joint 132 is connected to the heater 14, the outlet of the water-distribution joint 132 is connected to the water supply pipeline 11, and the driving mechanism 131 optionally delivers hot water or steam from the heater 14 to the water supply pipeline 11 through the outlet of the water-distribution joint 132. The heater 14 may be an instantaneous hot plate or a water heat apparatus such as a boiler. The electric valve 13 is constructed as the diverter valve, which not only selectively allows or restricts the communication between the water supply pipeline 11 and the third connection port 423, but also introduces hot water or steam into the water supply pipeline 11 to realize several cleaning modes of the milk pipe, i.e., steam cleaning or hot water cleaning.

Taking the beverage machine as a coffee machine as an example, when milk is supplied, water supplied from the water supply source to the water supply pipeline 11 is cut off by the diverter valve 13, and the third connection port 423 of the three-way valve 42 connected to the water supply pipeline 11 remains connected to the second connection port 422 connected to the milk supply pipeline 12; and the first connection port 421 is controlled to open by a stepping motor of the three-way valve 42, and through the Venturi principle adopted by the foaming apparatus 15, milk in the liquid storage container 50 flows into the foaming apparatus 15 via the liquid guiding pipe 431, the first connection port 421, the second connection port 422, the milk supply pipeline 12 and the milk feeding pipeline 16, and then liquid in a form of milk/milk froth is discharged through an outlet of the coffee machine. In the first cleaning mode, the liquid guiding pipe 431 is connected to the cleaning box 46, and through the Venturi principle adopted by the foaming apparatus 15, liquid in the cleaning box 46 flows into the foaming apparatus 15 via the liquid guiding pipe 431, the second connection port 422, the milk supply pipeline 12 and the milk feeding pipeline 16, and then the liquid is discharged through the outlet of the coffee machine, so that deep cleaning of pipelines and components through which milk flows can be realized. In this embodiment, in the first cleaning mode, the liquid in the cleaning box 46 is sucked out by a suction force in the foaming device 15 according to the Venturi principle, and in other embodiments, there may be other apparatuses with a suction force, such as a pump, and the liquid in the cleaning box 46 is sucked out by the pump. In the second cleaning mode, the first connection port 421 connected to the liquid guiding pipe 431 is closed by the stepping motor of the three-way valve 42, water supplied from the diverter valve 13 to the water supply pipeline 11 is opened, cleaning water/steam is supplied from the water supply pipeline 11 to the third connection port 423, the second connection port 422 of the three-way valve 42, the milk supply pipeline 12 and the milk feeding pipeline 16, and then the cleaning water/steam flows into the foaming apparatus 15, and finally the cleaning water/steam is discharged through the outlet of the coffee machine, so that the automatic cleaning of the milk pipe is achieved. In the second cleaning mode, the automatic cleaning may be achieved by directly utilizing a water supply pressure in the water supply pipeline 11, for example, the water supply pressure is supplied by a water pump in the beverage machine.

An embodiment of the present disclosure further provides a method of cleaning a milk pipe, including following steps:
receiving a signal indicating a first cleaning mode is selected;
controlling a communication between a water supply pipeline and a liquid guiding pipe, to fill a cleaning box with cleaning water;
closing the communication between the water supply pipeline and the liquid guiding pipe; and
opening an outlet of a beverage machine, transporting liquid in the cleaning box to a milk feeding pipeline of the beverage machine through a milk supply pipeline, and then discharging the liquid through the outlet.

Deep cleaning of the milk pipe can be achieved by the above method, and the method is simple and easy to operate. Herein, the receiving the signal indicating the first cleaning mode is selected may be a signal indicating another end of the liquid guiding pipe is inserted into a second inlet and outlet port of the cleaning box 46, which is triggered when another end of the liquid guiding pipe is connected to the cleaning box by users; or a cleaning identifier on an operation panel is triggered after the another end of the liquid guiding pipe is connected to the cleaning box by users.

When a manual operation is needed, after cleaning indication is received, the door of a refrigerating apparatus is unlocked and opened, the another end of the liquid guiding pipe is separated from a milk supply source, and then the another end of the liquid guiding pipe is inserted into a corresponding inlet and outlet port of the cleaning box. The receiving a signal indicating a second cleaning mode is selected includes: receiving a signal indicating that the door of the refrigerating apparatus is open, and a signal indicating another end of the liquid guiding pipe is inserted into the corresponding inlet and outlet port of the cleaning box. The operation is very convenient without detaching pipelines to clean manually, thus saving time.

Herein, the steps of "transporting liquid in the cleaning box to a milk feeding pipeline of the beverage machine through a milk supply pipeline, and then discharging the liquid through the outlet" specifically includes: providing steam for a foaming apparatus 15, generating a suction force by the foaming apparatus 15 based on the Venturi principle, and under the suction force, the liquid in the cleaning box flowing into the liquid guiding pipe 431, a second connection port 422, the milk supply pipeline 12 and the milk feeding pipeline 16, and then the liquid flowing into the foaming apparatus 15, and finally the liquid being discharged through the outlet of the beverage machine. Of course, if the suction force is generated by a pump, the steps may include sucking out the liquid in the cleaning box by starting the pump.

The method of cleaning the milk pipe further includes: receiving a signal indicating a second cleaning mode is selected, closing a first connection port from a milk supply source to the milk supply pipeline, controlling a communication between the water supply pipeline and the milk supply pipeline, opening the outlet of the beverage machine, transporting water or steam from the water supply pipeline to the milk feeding pipeline of the beverage machine through the milk supply pipeline, and then discharging the water or steam through the outlet. Only relevant pipelines or connection ports need to be controlled to open and close to achieve another cleaning mode, which provides a wider selection of cleaning modes for users. Further, the second cleaning mode may be triggered automatically based on the fulfilment of preset parameters.

The above embodiments are a scenario where one liquid storage container 50 is installed in the storage chamber 21 of the refrigerating apparatus, used in cooperation with one beverage machine.

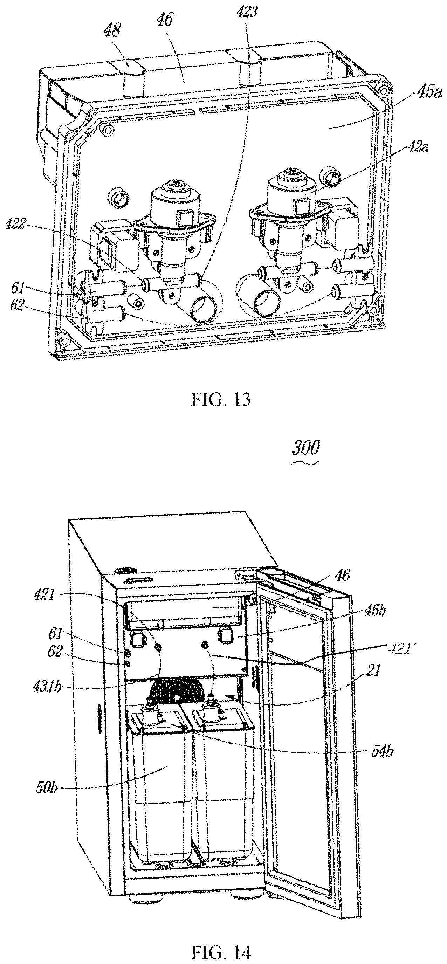

Referring to another embodiment shown in FIG .12 and FIG. 13, reference numbers in this embodiment is the same as the reference numbers in the above embodiments, with similar structure and function, and details are not described herein again. In this embodiment, a refrigerating apparatus 200 is also installed with one liquid storage container 50a in a storage chamber 21, but a box cover 54a of the one liquid storage container 50a is connected to two liquid guiding pipes 431 a, a mounting plate 45a is also connected to two three-way valves 42a, and each of the two liquid guiding pipes 431a is connected to a first connection port 421 of the corresponding three-way valve 42a. In this way, the refrigerating apparatus 200 may be used in cooperation with two beverage machines simultaneously, second connection ports 422 of the two three-way valves 42a are connected to the two beverage machines, respectively, and third connection ports 423 of the two three-way valves 42a are used for connecting water supply pipelines of the two beverage machines, respectively.

The mounting plate 45a is installed with a first connector 61 and a second connector 62 which correspond to every three-way valve 42a, respectively, the second connection port 422 is connected to a liquid supply pipeline of the beverage machine through the first connector 61, and the third connection port 423 is connected to the water supply pipeline of the beverage machine through the second connector 62. A pipeline connection of the first connector 61 and the corresponding three-way valve 42 is the same as a pipeline connection in the forgoing embodiments, and a pipeline connection of the second connector 62 and the corresponding three-way valve 42 is the same as the pipeline connection in the forgoing embodiments. In this embodiment, the cleaning box 46 is connected to two pipe connectors 48, and when deep cleaning is needed, the two liquid guiding pipes 431 are connected to the two pipe connectors 48, respectively, so that cleaning for the milk pipes of the two beverage machines are achieved simultaneously, or cleaning for the milk pipe of each beverage machine is achieved separately.

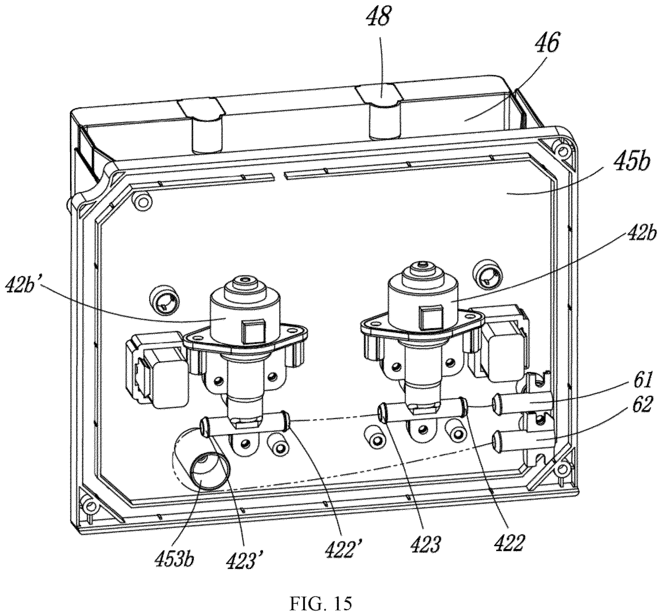

Referring to yet still another embodiment shown in FIG. 14 and FIG. 15, reference numbers in this embodiment is the same as the reference numbers in the above embodiments, with similar structure and function, and details are not described herein again. In this embodiment, a refrigerating apparatus 300 is installed with two liquid storage containers 50b in a storage chamber 21, the box cover 54b of each of the two liquid storage containers 50b is connected to one liquid guiding pipe 431b, two three-way valves 42b, 42b' are connected to a mounting plate 45b, and each liquid guiding pipe 431b is connected to a first connection port 421 of the corresponding three-way valve 42b. The mounting plate 45a is installed with a first connector 61 and a second connector 62 that are corresponding to one three-way valve 42b, a second connection port 422 of the one three-way valve 42b is connected to a liquid supply pipeline of the beverage machine through the first connector 61, a third connection port 423 of the one three-way valve 42b is connected to a second connection port 422' of another three-way valve 42b', and a third connection port 423' of the another three-way valve 42b' is connected to the water supply pipeline of the beverage machine through the second connector 62, i.e., the two three-way valves are connected in series. A guide post 453b is installed near the third connection port 423' of the three-way valve 42b' connected to the second connector 62, and a pipe connected between the third connection port 423' and an outlet of the second connector 62 bypasses along a circumferential direction of the guide post 453b.

In this way, the refrigerating apparatus 200 is used in cooperation with one beverage machine, and different types of liquids are in the two liquid storage containers, for example, milk is in a liquid storage container and plant milk is in another liquid storage container, used for the one beverage machine. In this embodiment, the cleaning box 46 is connected to two pipe connectors 48, and when deep cleaning is needed, the two liquid guiding pipes 431b are connected to the two pipe connectors 48, respectively, so that cleaning for the two liquid guiding pipes 431b are achieved simultaneously. Of course, there may be two liquid storage containers or a plurality of liquid storage containers that are more than two, the cleaning box 46 also includes two channels or a plurality of channels that are more than two connected to a cavity, an end of each of a plurality of liquid guiding pipes is connected between the corresponding water supply pipeline and the corresponding milk supply pipeline, and another end of each of the plurality of liquid guiding pipes is selectively connected to a second inlet and outlet port of the corresponding channel or the liquid storage container in the storage chamber. When a plurality of milk pipes are needed to be cleaned, the receiving a signal indicating a first cleaning mode is selected includes receiving a signal indicating the another end of each of the plurality of liquid guiding pipes is inserted into the corresponding inlet and outlet port of a same cleaning box, so that one cleaning box is used for achieving deep cleaning for the plurality of milk pipes.

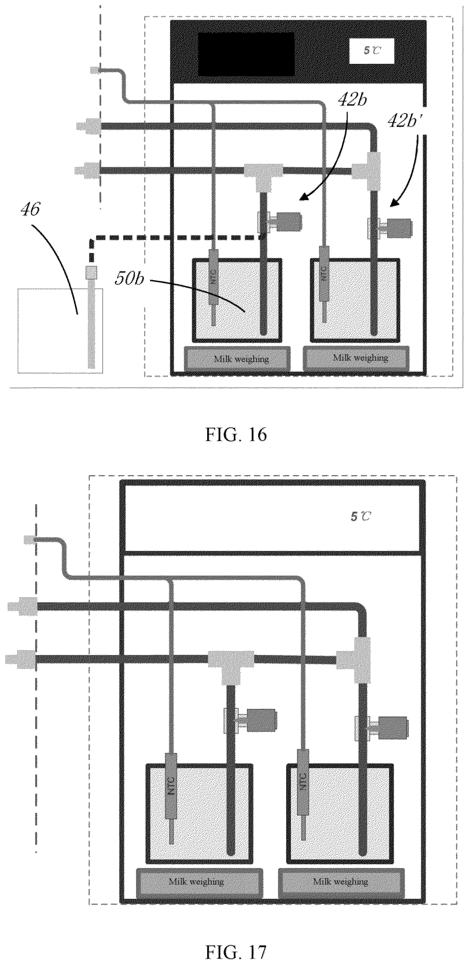

Referring to a schematic diagram of a water pipe shown in FIG. 16, the liquid guiding pipe 431 is connected to the cleaning box 46, the outlet of a water-distribution joint 132, connected to the water supply pipeline 11, is opened by a driving mechanism 131 of an electric valve 13, cleaning water from the heater 14 is transported to the water supply pipeline 11 through the outlet of the water-distribution joint 132, and then the cleaning water is supplied to the third connection port 423 of the three-way valve 42, the cleaning water flows into the cleaning box 46 through the first connection port 421 to dilute cleanser, and then the outlet of the water-distribution joint 132, connected to the water supply pipeline 11, is closed by the driving mechanism 131 of the electric valve 13 to cut off the water supply pipeline 11 used for transporting the cleaning water, cleanser water in the cleaning box 46 flows into the milk feeding pipeline of the beverage machine through the second connection port 422, and then the cleanser water flows into a foaming apparatus, and finally the cleaner water is discharged through an outlet of the beverage machine.

Referring to FIG. 14 to FIG. 16, when milk is supplied for the beverage machine, the liquid guiding pipe 431 is connected to the milk supply source, water supplied from a water supply source to the water supply pipeline 11 is cut off by the diverter valve 13, and the third connection port 423' of a second three-way valve 42b' connected to the water supply pipeline 11 remains connected to the second connection port 422 of a first three-way valve 42b connected to the milk feeding pipeline; and the first connection port 421 of the first three-way valve 42b is controlled to open by a stepping motor of the first three-way valve 42b, or the first connection port 421' of the second three-way valve 42b' is controlled to open by a stepping motor of the second three-way valve 42b', and then through the Venturi principle adopted by the foaming apparatus 15, milk in the corresponding liquid storage container 50b flows into the foaming apparatus 15 via the liquid guiding pipe 431, the first connection port 421, the second connection port 422, the milk supply pipeline 12 and the milk feeding pipeline 16, and finally liquid in a form of milk/milk froth is discharged through the outlet of a coffee machine.

As shown in FIG. 17, in the second cleaning mode, the first connection port of the first three-way valve 42b and the first connection port of the second three-way valve 42b' that are connected to the liquid guiding pipe 431 are closed by the stepping motor, the diverter valve 13 is opened to supply water to the water supply pipeline 11, cleaning water/steam is supplied from the water supply pipeline 11 to the third connection port of the second three-way valve 42b', the second connection port of the second three-way valve 42b', the third connection port of the first three-way valve 42b, the second connection port of the first three-way valve 42b and the milk feeding pipeline, and then the cleaning water/steam flows into the foaming apparatus 15, and finally the cleaning water/steam is discharged through the outlet of the coffee machine.

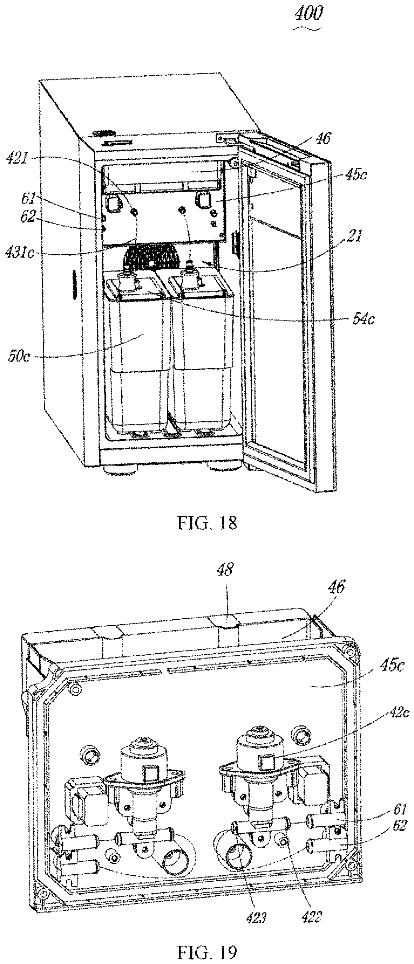

Referring to still another embodiment shown in FIG. 18 and FIG. 19, reference numbers in this embodiment is the same as the reference numbers in the above embodiments, with similar structure and function, and details are not described herein again. In this embodiment, a refrigerating apparatus 400 is installed with two liquid storage containers 50c in a storage chamber 21, a box cover 54c of each of the two liquid storage containers 50c is connected to one liquid guiding pipe 431c, and two three-way valves 42c are connected to a mounting plate 45c, and each liquid guiding pipe 431c is connected to a first connection port 421 of the corresponding three-way valve 42c. In this way, the refrigerating apparatus may also be used in cooperation with two beverage machines simultaneously, second connection ports 422 of the two three-way valves 42c are connected to the two beverage machines, respectively, and third connection ports 423 of the two three-way valves 42c are connected to the water supply pipelines in the two beverage machines, respectively. Two pipe connectors 48 are attached to the cleaning box 46, and when deep cleaning is needed, the two liquid guiding pipes 431 are connected to the two pipe connectors 48, respectively, so that cleaning for the milk pipes of the two beverage machines are achieved simultaneously.

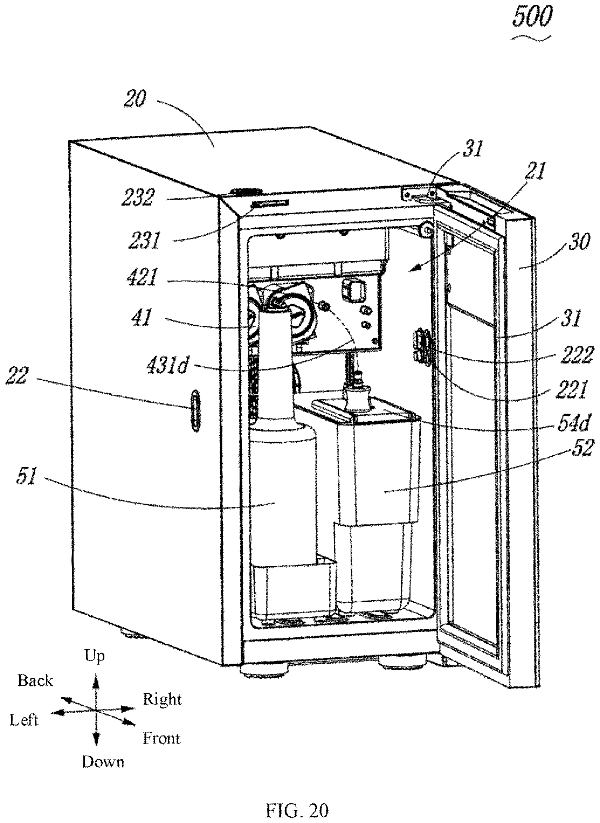

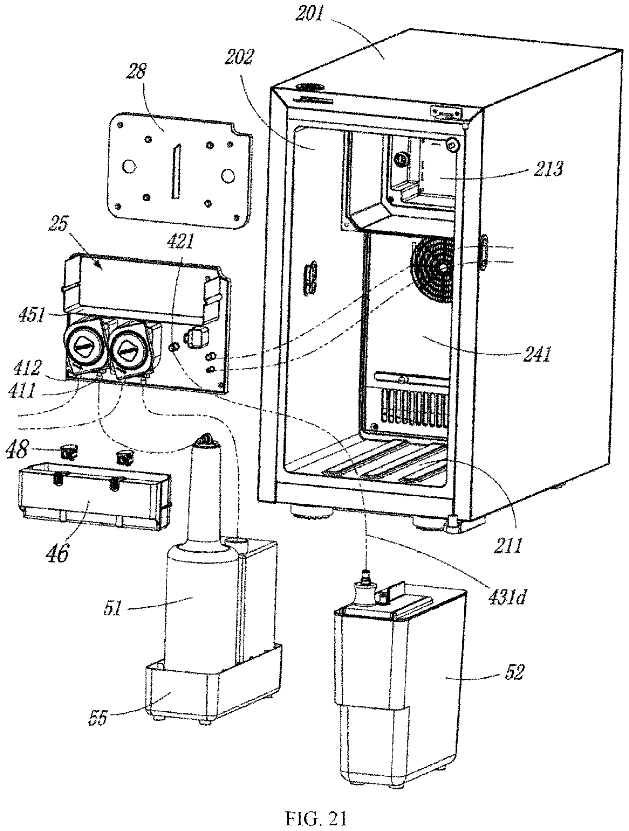

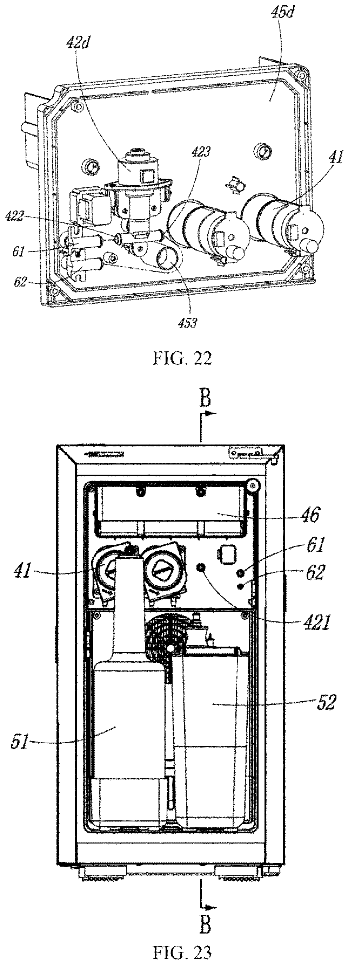

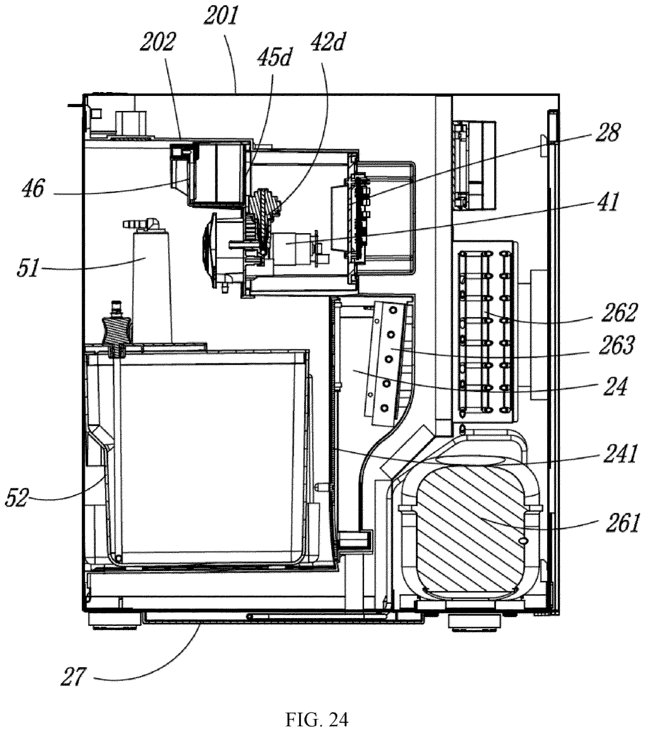

Referring to still another embodiment shown in FIG. 20 to FIG. 24, reference numbers in this embodiment is the same as the reference numbers in the above embodiments, with similar structure and function, and details are not described herein again. In this embodiment, a refrigerating apparatus 500 is installed with a first liquid storage container 51 and a second liquid storage container 52 in a storage chamber 21, and the first liquid storage container 51 may be an original packaging of liquid, such as a syrup bottle, a coconut milk box or a concentrated tea liquid box. The second liquid storage container 52 may be a container specifically used for storing milk, and the milk may be added to the second storage container 52. A box cover 54d of the second liquid storage container 52 is connected to a liquid guiding pipe 431d, a mounting plate 45d is connected to a driving pump 41 and a three-way valve 42d, the driving pump 41 is used for transporting liquid in the first liquid storage container 51 in the storage chamber to a beverage machine, a first connection port 421 of the three-way valve 42d is connected to the second liquid storage container 52 through the liquid guiding pipe 431d, and a second connection port 422 of the three-way valve 42d is connected to the beverage machine through pipelines. The driving pump 41 and the three-way valve 42d are installed simultaneously in the storage chamber 21 of a liquid fresh-keeping apparatus, so that at least two different types of auxiliary materials may be supplied for the beverage machine, and since the driving pump 41 and the three-way valve 42d are of different types, the auxiliary materials may also correspond to different viscosities/properties, such as syrup and milk, so as to provide a wider selection of tastes of beverages for users.

Herein, a container position 211 for placing the first liquid storage container 51 and the second liquid storage container 52 is formed at the bottom of the storage chamber 21, and the driving pump 41 and the three-way valve 42d are installed side-by-side above the container position 211. The driving pump 41 and the three-way valve 42d are installed side-by-side above the container position 211 for placing the first liquid storage container 51 and the second liquid storage container 52, so that the space in the storage chamber 21 is used reasonably, a pipeline connection is relatively convenient, at the same time, there is no need to increase a volume of the liquid fresh-keeping apparatus, and a wider selection of auxiliary materials may be supplied for the beverage machine to make more tastes of beverages. Two first liquid storage container 51 may be installed, such as the syrup bottle and the concentrated tea liquid box, and a storage box 55 is installed for placing the syrup bottle and the concentrated tea liquid box, which is easy to reach and store. The second liquid storage container 52 is a container specifically used for storing milk, the milk may be added to the second liquid storage container 52, and when the milk needs to be transported, the milk in the second liquid storage container 52 may be sucked out by a foaming apparatus in the beverage machine to make the required hot milk or milk froth.

The first liquid storage container 51 and the second liquid storage container 52 are located in a storage space, an input port 411 and an output port 412 of the driving pump 41 are installed towards the bottom of the storage space, so that a pipeline connection between the driving pump 41 and the first liquid storage container 51, and a pipeline connection between the driving pump 41 and the beverage machine are convenient, and the length of a connected pipeline may be shorter base on a compact space, thus saving cost.

The three-way valve 42d and the driving pump 41 are both installed on the mounting plate 45d, the input port 411 and the output port 412 of the driving pump 41 are exposed on the outside of the mounting plate 45d, and the first connection port 421 of the three-way valve 42d is exposed on the outside of the mounting plated 45d. The connection ports that need to be connected to pipelines are installed outside of the mounting plate 45d, so that when the pipelines need to be connected, only the pipe needs to be connected to the corresponding connection port or port, so that a connection is very convenient when the pipelines are connected or replaced. In addition, the cleaning box 46 is installed above the driving pump 41 and the three-way valve 42d, so that the storage space may be fully used.

In a preferred embodiment, the driving pump 41 is constructed as a peristaltic pump, and an axis of a driver of the peristaltic pump is horizontally installed along a direction from front to back. The peristaltic pump may be disposed front to back across the mounting cavity 213, so that a connection between the peristaltic pump and the mounting plate 45d is more convenient. Of course, the driving pump 41 may also be a diaphragm pump, a mixed flow pump, a piston pump, etc. The number of the driving pumps 41 may depend on the number of the first liquid storage containers 51, for example, when the number of the first liquid storage containers 51 is two, the number of the driving pumps 41 is also two. Of course, in order to ensure that more auxiliary materials may be output, at least two driving pumps 41 are installed, at least two driving pumps 41 are installed side-by-side along a direction from left to right, users may select to place one first liquid storage container 51 in the storage space, and only one driving pumps 41 is used, or users may select to place two first liquid storage containers 51, and two driving pumps 41 are correspondingly used. Of course, three or more than three driving pumps may also be installed according to types of tastes of beverages output by the beverage machine, so as to correspondingly output three or more than three auxiliary materials.

The refrigerating apparatus in this embodiment may be used in cooperation with one beverage machine for providing different types of auxiliary materials to the beverage machine. The second connection port 422 of the three-way valve 42d is connected to a liquid supply pipeline of the beverage machine, and the third connection port 423 of the three-way valve 42d is connected to the water supply pipeline of the beverage machine. The cleaning box 46 is only installed with one pipe connector 48, and when deep cleaning is needed, the liquid guiding pipe 431b is connected to the pipe connector 48, so that cleaning for the milk pipe of the beverage machine can be achieved.

It should be understood that although the specification is described according to the embodiments, not every embodiment includes only one independent technical solution, the specification presented in this way is merely for the sake of clarity, a person skilled in the art should take the specification as a whole, and the technical solutions in various embodiments may also be appropriately combined to form other embodiments that may be understood by a person skilled in the art. The series of detailed explanations listed above are merely specific explanations of the feasibility embodiments of the present disclosure, and are not intended to limit the protection scope of the present disclosure, and any equivalent embodiment or change without departing from the spirit of the present disclosure shall fall within the protection scope of the present disclosure.

## Claims

1. A cleaning water pipe for a refrigerating apparatus and a beverage machine, comprising:
a water supply pipeline; and
a milk supply pipeline, connected between a milk supply source and a milk feeding pipeline of the beverage machine, and the milk supply source being installed in the refrigerating apparatus,
**characterized in that**, the cleaning water pipe further comprises a liquid guiding pipe and a cleaning box installed in the refrigerating apparatus, an end of the liquid guiding pipe is connected between the water supply pipeline and the milk supply pipeline, another end of the liquid guiding pipe is selectively connected to the milk supply source or the cleaning box to switch between a milk supply mode and a first cleaning mode, and an electric valve is installed on the water supply pipeline; and in the first cleaning mode, the another end of the liquid guiding pipe remains connected to the cleaning box, the electric valve is configured to allow a communication between the water supply pipeline and the liquid guiding pipe to allow cleaning water to be introduced into the cleaning box, and liquid in the cleaning box is introduced into the milk feeding pipeline of the beverage machine through the milk supply pipeline.

2. The cleaning water pipe according to claim 1, wherein a three-way valve is installed between the water supply pipeline and the milk supply pipeline, a first connection port of the three-way valve is selectively connected to the milk supply source or the cleaning box through the liquid guiding pipe, a second connection port of the three-way valve is connected to the milk feeding pipeline of the beverage machine, a third connection port of the three-way valve is connected to the water supply pipeline, and the second connection port and the third connection port are kept normally-on.

3. The cleaning water pipe according to claim 2, further comprising a second cleaning mode; wherein in the second cleaning mode, the another end of the liquid guiding pipe remains connected to the milk supply source, the first connection port is closed by the three-way valve, and the electric valve is configured to allow a communication between the water supply pipeline and the third connection port.

4. The cleaning water pipe according to claim 2, further comprising a first connector and a second connector, wherein the second connection port is connected to the milk supply pipeline through the first connector, and the third connection port is connected to the water supply pipeline through the second connector.

5. The cleaning water pipe according to claim 1 or 2, wherein the electric valve is constructed as a diverter valve, the diverter valve comprises a driving mechanism and a water-distribution joint, an inlet of the water-distribution joint is connected to a heater, an outlet of the water-distribution joint is connected to the water supply pipeline, and the driving mechanism optionally delivers hot water or steam from the heater to the water supply pipeline through the outlet of the water-distribution joint.

6. The cleaning water pipe according to claim 1, wherein the liquid guiding pipe comprises a first liquid guiding pipe and a second liquid guiding pipe, both an end of the first liquid guiding pipe and an end of the second liquid guiding pipe are connected between the water supply pipeline and the milk supply pipeline, and another end of the first liquid guiding pipe and another end of the second liquid guiding pipe are selectively connected to different milk supply sources, respectively, or both another end of the first liquid guiding pipe and another end of the second liquid guiding pipe are selectively connected to a same cleaning box.

7. A refrigerating apparatus, comprising:
a case, formed with a storage chamber, and a milk supply source supplied for a beverage machine being stored in the storage chamber;
a door, movably connected to the case to open and close the storage chamber; and
a cooling system, provided in the case to supply cooling capacity for the storage chamber;
**characterized in that**, the refrigerating apparatus further comprises a liquid guiding pipe and a cleaning box installed in the storage chamber, an end of the liquid guiding pipe is connected between a water supply pipeline supplied by the beverage machine and a milk supply pipeline supplied for the beverage machine, another end of the liquid guiding pipe is selectively connected to the milk supply source or the cleaning box to switch between a milk supply mode and a first cleaning mode, and an electric valve is installed on the water supply pipeline; and in the first cleaning mode, the another end of the liquid guiding pipe remains connected to the cleaning box, the electric valve is configured to allow a communication between the water supply pipeline and the liquid guiding pipe to allow cleaning water to be introduced into the cleaning box, and liquid in the cleaning box is introduced into a milk feeding pipeline of the beverage machine through the milk supply pipeline.

8. The refrigerating apparatus according to claim 7, wherein the cleaning box is installed with a cavity for accommodating liquid, the storage chamber is installed with a mounting position for accommodating the cleaning box, and the cleaning box is detachably connected to the mounting position.

9. The refrigerating apparatus according to claim 8, wherein the cleaning box comprises a channel connected to the cavity, the channel is installed with a first inlet and outlet port adjacent to the bottom of the cavity and a second inlet and outlet port located above the first inlet and outlet port, and the second inlet and outlet port is selectively connected to the water supply pipeline of the beverage machine and/or the milk feeding pipeline of the beverage machine.

10. The refrigerating apparatus according to claim 9, wherein the cleaning box comprises a plurality of channels connected to the cavity, an end of each of a plurality of liquid guiding pipes is connected between the corresponding water supply pipeline and the corresponding milk supply pipeline, and another end of each of the plurality of liquid guiding pipes is selectively connected to the second inlet and outlet port of the corresponding channel or a liquid storage container in the storage chamber

11. The refrigerating apparatus according to claim 9, wherein the refrigerating apparatus further comprises a pipe connector connected to the cleaning box, the pipe connector has a first port and a second port that are connected to each other, the second inlet and outlet port is connected to the first port, and the second port is selectively connected to the water supply pipeline of the beverage machine and/or the milk feeding pipeline of the beverage machine.

12. The refrigerating apparatus according to claim 11, wherein the case comprises the front side to which the door is attached and the back side relative to the front side, the cleaning box is connected to the mounting position along a direction from front to back, and the pipe connector is located at the front of the cleaning box, and the pipe connector is connected to the cleaning box by means of a snap connection along a direction from up to down.

13. The refrigerating apparatus according to claim 7, wherein a three-way valve is installed between the water supply pipeline and the milk supply pipeline, a first connection port of the three-way valve is selectively connected to the milk supply source or the cleaning box through the liquid guiding pipe, a second connection port of the three-way valve is connected to the milk feeding pipeline of the beverage machine, a third connection port of the three-way valve is connected to the water supply pipeline, and the second connection port and the third connection port are kept normally-on.

14. The refrigerating apparatus according to claim 13, wherein the refrigerating apparatus further comprises a second cleaning mode; and in the second cleaning mode, the end of the liquid guiding pipe is connected to the first connection port, the another end of the liquid guiding pipe is connected to the milk supply source, the first connection port is closed by the three-way valve, and the electric valve is configured to allow a communication between the water supply pipeline and the third connection port.

15. The refrigerating apparatus according to claim 13, wherein further comprising a mounting plate installed at the back side of the cleaning box, wherein the three-way valve is installed on the mounting plate, the first connection port of the three-way valve is exposed on the outside of the mounting plate, and the mounting position is installed on the mounting plate.

16. The refrigerating apparatus according to claim 7, further comprising a driving pump and a three-way valve that are installed in the storage chamber, wherein the driving pump is used for transporting liquid in a first liquid storage container in the storage chamber to the beverage machine, a first connection port of the three-way valve is connected to a second liquid storage container through the liquid guiding pipe, and a second connection port of the three-way valve is connected to the milk feeding pipeline of the beverage machine through the milk supply pipeline.

17. A method of cleaning a milk pipe, comprising following steps:
receiving a signal indicating a first cleaning mode is selected;
controlling a communication between a water supply pipeline and a liquid guiding pipe, to fill a cleaning box with cleaning water;
closing the communication between the water supply pipeline and the liquid guiding pipe; and
opening an outlet of a beverage machine, transporting liquid in the cleaning box to a milk feeding pipeline of the beverage machine through a milk supply pipeline, and then discharging the liquid through the outlet.

18. The method of cleaning the milk pipe according to claim 17, further comprising:
receiving a signal indicating a second cleaning mode is selected, closing a first connection port from a milk supply source to the milk supply pipeline, controlling a communication between the water supply pipeline and the milk supply pipeline, opening the outlet of the beverage machine, transporting water or steam from the water supply pipeline to the milk feeding pipeline of the beverage machine through the milk supply pipeline, and then discharging the water or steam through the outlet.

19. The method of cleaning the milk pipe according to claim 17, wherein the receiving a signal indicating a first cleaning mode is selected comprises: receiving a signal indicating that the door of a refrigerating apparatus is open, and a signal indicating another end of the liquid guiding pipe is inserted into a corresponding inlet and outlet port of the cleaning box.

20. The method of cleaning the milk pipe according to claim 17, wherein the receiving a signal indicating a first cleaning mode is selected comprises: receiving a signal indicating that the door of a refrigerating apparatus is open, and a signal indicating another end of each of a plurality of liquid guiding pipes is inserted into a corresponding inlet and outlet port of a same cleaning box.
